# FASCICULE DE BREVET EUROPEEN

(11) **EP 3 055 346 B1**
(45) Date de publication et mention de la délivrance du brevet: **21.02.2018**
(21) Numéro de dépôt: 14780876.0
(22) Date de dépôt: 06.10.2014
(51) Int. Cl.: C08G 69/40

(54) **COPOLYMÈRE À BLOCS POLYAMIDE ET À BLOC POLYÉTHER**
COPOLYMER MIT POLYAMIDBLÖCKEN UND EINEM POLYETHERBLOCK
COPOLYMER WITH POLYAMIDE BLOCKS AND A POLYETHER BLOCK

(30) Priorité: 07.10.2013 FR 1359704
(43) Date de publication de la demande: 17.08.2016
(73) Titulaire: Arkema France, 92700 Colombes (FR)
(72) Inventeur: MALET, Frédéric, F-69007 Lyon (FR)
(74) Mandataire: Casalonga
(86) Numéro de dépôt international: PCT/EP2014/071332
(87) Numéro de publication internationale: WO 2015/052127

(56) Documents cités:
- EP-A2- 0 156 035
- EP-A2- 0 857 745
- FR-A1- 2 965 269

## Description

La présente invention porte sur un copolymère comprenant au moins deux blocs polyamide distincts et au moins un bloc polyéther.

Les copolymères à bloc amide et à bloc éther sont des matériaux très souples, résistants au choc, mais dont la transparence est assez faible (45 à 65% de transmission lumineuse à 560 nm pour une épaisseur de 2mm), tout comme leurs homologues polyamides sans motifs éthers.

Les blocs polyamide sont connus pour être des segments dits rigides à température de fusion (Tf) ou température de transition vitreuse (Tg) plus élevées que la température d'utilisation du polymère, tandis que les blocs polyéther sont des segments dits souples à Tf ou Tg moins élevées que la température d'utilisation dudit polymère.

Le document FR 2 273 021 décrit des copolymères formés de blocs polyamide et de blocs polyéther, les blocs polyamide et les blocs polyéther étant reliés par une fonction ester. Ces produits sont vendus sous le nom commercial PEBAX® par la société ARKEMA.

Les copolymères à blocs polyamide (abrégé ci-dessous PA) et à blocs polyéther (abrégé ci- dessous PE) résultent de la copolycondensation de blocs polyamide à extrémités réactives avec des blocs polyéther à extrémités réactives. Par exemple, on peut faire réagir :
- du polyéther diol, et un polyamide diacide carboxylique
- de la polyétherdiamine et un polyamide diacide carboxylique,
- du polyétherdiol et un polyamide diamine.

Les blocs polyamides à bouts de chaînes dicarboxyliques proviennent par exemple de la condensation de précurseurs de polyamides en présence d'un diacide carboxylique régulateur de chaîne. Les blocs polyamides à bouts de chaînes diamine proviennent par exemple de la condensation de précurseurs de polyamides en présence d'une diamine régulatrice de chaîne. Ainsi, la liaison entre les blocs est soit une liaison ester, soit une liaison amide.

Les polymères à blocs PA et à blocs PE peuvent comprendre un seul bloc PA et un seul bloc PE.

Ils peuvent aussi comprendre plusieurs blocs PA identiques en termes de structure du ou des monomères constitutifs du polyamide et PE identiques répartis de façon aléatoire. Lesdits polymères peuvent être préparés par réaction simultanée des blocs PE, et des précurseurs des blocs PA. On obtient alors un polymère ayant des blocs PE et des blocs PA de longueur très variable dépendant du moment au cours duquel le régulateur de chaîne intervient durant la formation du bloc PA, mais aussi les différents réactifs ayant réagi de façon aléatoire qui sont répartis de façon aléatoire (statistique) le long de la chaîne polymère.

Depuis un certain nombre d'années, il est recherché des copolymères formés de blocs polyamide et de blocs polyéther présentant des propriétés mécaniques, thermiques et optiques intéressantes. Pour résoudre ce problème, différentes approches ont été envisagées. Dans le document WO 2008/006987, le choix spécifique de monomère particulier, tel que des diamines cycloaliphatiques permet l'obtention de matériaux transparents.

La Société déposante a maintenant découvert que la présence d'au moins deux blocs de polyamide distincts assemblés à au moins un bloc polyéther de manière spécifique permet d'avoir des propriétés mécaniques, optiques et thermiques intéressantes. Il est en effet possible d'augmenter la transparence du matériau ou les propriétés thermiques en choisissant de façon appropriée la nature chimique des deux blocs polyamide.

La présente invention a donc pour objet un copolymère comprenant au moins deux blocs polyamide distincts et au moins un bloc polyéther.

L'invention porte également sur un procédé de préparation de ce copolymère, ainsi que sur ses utilisations, notamment pour la fabrication d'articles de sport.

L'invention porte aussi sur un article façonné comprenant le copolymère selon l'invention.

D'autres caractéristiques, aspects, objets et avantages de la présente invention apparaîtront encore plus clairement à la lecture de la description et des exemples qui suivent.

La nomenclature utilisée pour définir les polyamides est décrite dans la norme ISO 1874-1:1992 "*Plastiques* - *Matériaux polyamides (PA) pour moulage et extrusion* - *Partie 1 : Désignation*", notamment en page 3 (tableaux 1 et 2) et est bien connue de l'homme du métier.

Il est par ailleurs précisé que les expressions "*compris entre* ... *et*..." et "*de... à...*" utilisées dans la présente description doivent s'entendre comme incluant chacune des bornes mentionnées. Par bloc, on entend au sens de la présente invention un segment polymérique d'une même nature, à savoir polyamide ou bien polyéther. Ce bloc polymérique peut être constitué d'un homopolymère ou bien d'un copolymère statistique ou à blocs.

### Les blocs polyamides

Une des conditions essentielles concernant la structure du copolymère selon l'invention est que les blocs polyamide, que l'on peut noter PA₁ et PA₂ soient distincts, c'est-à-dire de structure chimique différente.

Les blocs PA peuvent être à extrémités acides carboxyliques, on parle alors de PA acide dicarboxylique. Ils peuvent également être à extrémités amines, on parle de PA diamine. Les liaisons entre les blocs PA et les blocs PE peuvent donc être des liaisons ester ou alors des liaisons amide.

Le bloc polyamide peut être soit de structure "homopolyamide", c'est-à-dire issue de la polymérisation d'un seul monomère, soit de structure "copolyamide" issue de la polymérisation d'un mélange d'au moins deux monomères distincts.

Les blocs polyamides sont obtenus en présence d'un acide dicarboxylique ou d'une diamine, régulateur de chaîne, suivant que l'on souhaite des blocs polyamides respectivement à extrémités acide carboxylique ou aminé. Si les précurseurs comprennent déjà un acide dicarboxylique ou une diamine, il suffit par exemple de l'utiliser en excès, mais on peut aussi utiliser un autre acide dicarboxylique ou une autre diamine pris dans les groupes d'acides dicarboxyliques et de diamines définis ci-dessous.

Les blocs polyamide peuvent être constitués :
(i) d'une structure homopolyamide issue de la polymérisation
   (a) d'un lactame, en particulier d'un lactame en C₄-C₁₂,
   (b) d'un aminoacide, en particulier d'un aminoacide en C₄-C₁₂,
   (c) d'un couple (diamine.acide dicarboxylique) ou « diamine.diacide » qui est un produit de condensation d'une diamine aliphatique en C₂-C₄₀, linéaire ou ramifié, ou alors d'une diamine cyclique en C₆-C₄₀, aromatique, semi-aromatique ou non aromatique et d'un acide dicarboxylique aliphatique ou aromatique, de préférence un acide dicarboxylique aliphatique linéaire ou ramifié en C₄-C₄₀, de préférence en C₆-C₃₆, encore plus préférentiellement en C₆-C₁₈ ou;
(ii) d'une structure copolyamide issue de la polymérisation d'un mélange d'au moins deux motifs choisis parmi (a), (b) et (c).

A titre d'exemples de lactames, on peut citer le caprolactame, l'oenantholactame et le lauryllactame.

A titre d'exemples d'aminoacides, on peut citer les acides aminocaproïque, amino-7-heptanoïque, amino-11-undécanoïque et amino-12-dodécanoïque.

A titre d'exemples d'acides dicarboxyliques, on peut citer (i) les acides aliphatiques tels que l'acide 1,4-cyclohexyldicarboxylique, les acides butanedioïque, adipique, azélaïque, subérique, sébacique, pimélique, 1,7-heptanedioïque, 1,8-octanedioïque, 1,9-nonanedioïque, 1,10-décanedioïque, 1,11-undécanedioïque, 1,12-dodécanedicarboxylique, 1,14-tétradécanedicarboxylique, 1,18-octadécanedicarboxylique, (ii) les acides dicarboxyliques aromatiques tels que les acides téréphtalique et isophtalique, mais aussi (iii) les acides gras dimérisés.

Les acides dicarboxyliques peuvent être des dimères d'acides gras. Les acides gras sont des acides en C₄-C₂₈, encore plus préférentiellement en C₁₂-C₂₄, avantageusement en C₁₄-C₂₂ et plus spécialement des acides gras à chaîne alkyle en C₁₈. Des dimères d'acides gras appropriés sont des produits de dimérisation de deux acides gras, identiques ou différents, choisis parmi l'acide oléique, linoléique, linolénique, palmitoléique et l'acide elaidique. Les produits de dimérisation de mélange d'acides gras insaturés peuvent être obtenus par l'hydrolyse d'huiles ou graisses végétales, par exemple huile de tournesol, huile de graines de soja, huile d'olive, huile de graines de colza, huile de graines de coton. Les dimères d'acides gras hydrogénés, par exemple en utilisant des catalyseurs au nickel, peuvent aussi être utilisés. Par conséquent, l'acide gras dimérisé comprendra avantageusement 8 à 56 atomes de carbone, et de préférence 36 atomes de carbone.

Concernant la diamine, elle est choisie parmi les diamines aliphatiques, linéaires ou ramifiées, les diamines cycliques, aromatiques, semi-aromatiques ou non aromatiques. A titre d'exemples de diamines, on peut citer la 1,4-tétraméthylènediamine, la 1,6-hexaméthylènediamine, la 1,9-nonaméthylènediamine, la 1,10-décaméthylène diamine, la 1,12-dodécaméthylènediamine, la triméthylhexaméthylène diamine, les isomères de bis-(3-méthyl-4-aminocyclohexyl)méthane (BMACM ou B), le paraaminodicydohexyl méthane (PACM ou P), les isomères de 2-2-bis-(3-méthyl-4-aminocyclohexyl)-propane (BMACP), (en double) le 2,6-bis(aminométhyl)norbornane (BAMN), (en double) l'isophorone diamine (IPDA), m-xylène diamine (MXD) et la pipérazine (Pip).

Les blocs polyamides distincts présents dans le copolymère selon l'invention peuvent être obtenus par polymérisation d'un ou plusieurs motifs choisis parmi : 6, 11, 12, 4.6, 4.12, 4.14, 4.18, 6.6, 6.10, 6.12, 6.14, 6.18, Pip10, 9.6, 9.12, 10.10, 10.12, 10.14, 10.18, 10.36, 10.T, 6.T, 9.T, MXD.6, MXD.10, B.10, B.12, B.14, B.18, B.36, P.10, P.12, P.14, P.18, P.36,et leurs mélanges.

En particulier, le bloc PA1 comprend au moins un monomère choisi parmi: 6, 11, 12, 4.6, 4.12, 4.14, 4.18, 6.6, 6.10, 6.12, 6.14, 6.18, Pip10, 9.6, 9.12, 10.10, 10.12, 10.14, 10.18, 10.T, 6.T, 9.T, MXD.6, MXD.10 et leurs mélanges sous forme de copolyamides, par exemple PA 6/11, PA 6/12, PA 11/12, PA 10.10/10.12, PA 10.10/11 et PA 6/11/12.

De préférence, le bloc PA1 comprend au moins un monomère choisi parmi: 6, 11, 12, 10.10, 10.12, 6.10, 6.12, 10.T, 6.T, 9.T, et leurs mélanges sous forme de copolyamides par exemple PA 6/11, PA 6/12, PA 11/12, PA 10.10/10.12, PA 10.10/11 et PA 6/11/12.

Le pourcentage en poids de blocs PA1 sur le poids total de polyamide présent dans le copolymère est compris dans la gamme de 50 à 99%, de préférence 60 à 95%, de préférence encore de 65 à 90%.

En particulier, le bloc PA2 comprend au moins un monomère choisi parmi 6, 11, 12, 4.6, 4.12, 4.14, 4.18, 6.6, 6.10, 6.12, 6.14, 6.18, Pip.10, 9.6, 9.12, 10.10, 10.12, 10.14, 10.18, 10.36, B.10, B.12, B.14, B.18, B.36, P.10, P.12, P.14, P.18, P.36,et leurs mélanges sous forme de copolyamides, par exemple PA 6/11, PA 6/12, PA 11/12, PA 10.10/10.12, PA 10.10/11 et PA 6/11/12.

De préférence, le bloc PA2 comprend au moins un monomère choisi parmi : B.10, B.12, B.14, B.18, B.36, P.10, P.12, P.14, P.18, P.36, et les mélanges de ces monomères sous forme de copolyamides, tels que le PA B.10/B.12, PA B.12/B.14.

Selon un mode de réalisation préféré de l'invention, le polyamide PA1 présente un nombre d'atomes de carbone par atome d'azote supérieur ou égale à 8, de préférence il est choisi parmi PA11, PA12, PA 10.10, PA 6.10.

Il est rappelé qu'on distingue les homopolyamides et copolyamides par leur nombre d'atomes de carbone par atome d'azote, sachant qu'il y a autant d'atomes d'azote que de groupes amides (-CO-NH-).

Dans le cas d'un homopolyamide de type PA-X.Y, le nombre d'atomes de carbone par atome d'azote est la moyenne du motif X et du motif Y.

Dans le cas des copolyamides, le nombre d'atome de carbone par atome d'azote se calcule selon le même principe. Le calcul est réalisé au prorata molaire des différents motifs amides.

Un polyamide fortement carboné est un polyamide à fort taux d'atomes de carbone (C) par rapport à l'atome d'azote (N). Ce sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

Un polyamide faiblement carboné est un polyamide à faible taux d'atomes de carbone (C) par rapport à l'atome d'azote (-NH-). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Dans le cas d'un homopolyamide de type PA-X.Y, le nombre d'atomes de carbone par atome d'azote est la moyenne du motif X et du motif Y. Ainsi le PA6.12 est un PA à 9 atomes de carbone par atome d'azote, autrement dit est un PA en C₉. Le PA6.13 est en C_{9.5}. Le PA-12.T est en C₁₀, le T, c'est-à-dire l'acide téréphtalique, étant en C₈.

Selon un autre mode de réalisation de l'invention, le polyamide PA2 présente un nombre d'atomes de carbone par atome d'azote inférieur à 8, de préférence il est choisi parmi PA6, PA6.6.

Selon un autre mode de réalisation, le bloc PA2 minoritaire est choisi de telle façon que son point de fusion ou sa température de transition vitreuse (mesurée par DSC (Differential Scanning Calorimetry) conformément à la norme ISO 11357) soit supérieure à celui du bloc PA1. Par exemple, pour un bloc PA1 tel que PA11 ou PA12, on pourra prendre pour PA2 un bloc tel que PA6, PA6.6, PA10.10, PA6.10, PA6.12, PA10.T.

Le pourcentage en poids de blocs PA dans le copolymère est compris dans la gamme de 20 à 99% par rapport au poids total du copolymère.

Selon un mode de réalisation, la masse moléculaire moyenne en nombre des blocs polyamide dans le copolymère est comprise entre 500 et 20 000 g/mole, de préférence entre 600 et 15 000 g/mole, et plus particulièrement entre 600 et 10 000 g/mole.

### Le bloc polyéther :

Comme pour les polyamides, le bloc polyéther peut être un homopolymère ou bien un copolymère statistique ou bloc.

Les blocs PE sont des polyalkylènes éther polyol, notamment des polyalkylènes éther diol. Les blocs PE sont choisis parmi le polyéthylène éther glycol (PEG), le polypropylène éther glycol (PPG), le polytétraméthylène éther glycol (PTMG), le polyhexaméthylène éther glycol, le polytriméthylèneéther glycol (P03G), le poly(3-alkyl tétrahydrofuranne) en particulier le poly(3- méthyltétrahydrofuranne (poly(3MeTHF)) et leurs copolymère à blocs ou statistiques.

Les fins de chaînes des blocs PE peuvent être des diols ou bien des diamines suivant leur procédé de synthèse. Les blocs PE à bouts de chaîne amine peuvent être obtenus par cyanoacétylation de séquences polyoxyalkylène alpha-oméga dihydroxylées aliphatiques appelées polyétherdiols telles que la gamme des Elastamine® et Jeffamine® de la société Huntsman.

Le pourcentage en poids des blocs polyéther dans le copolymère est compris dans la gamme de 1 à 80%, de préférence 4 à 50%, de préférence encore entre 4 et 35%.

Selon un mode de réalisation, la masse moléculaire moyenne en nombre des blocs polyéther dans le copolymère est comprise entre 100 et 5000 g/mole, de préférence entre 200 et 2000 g/mole.

De préférence, le copolymère selon l'invention comporte des liaisons esters entre chacun des blocs.

Selon ce mode de réalisation, le bloc PA se termine par des fonctions acides et le bloc PE se termine par des fonctions alcools, de manière à former une liaison ester entre les deux blocs.

### Agencement des blocs

Le copolymère bloc selon l'invention comporte au moins deux blocs polyamide de structure chimique différente (PA1 et PA2) assemblés à au moins un bloc polyéther (PE) de manière spécifique.

Les deux blocs polyamide PA1 et PA2 sont reliés entre eux par un bloc polyéther PE intermédiaire. La structure du copolymère bloc selon l'invention peut se définir par le schéma suivant : PA1-PE-PA2.

En d'autres termes, le copolymère selon l'invention peut se définir comme un copolymère à blocs alternés de PA et de PE, dont au moins deux PA sont de structure chimique différente.

### Procédé

L'invention porte également sur un procédé de préparation du copolymère tel que défini ci-dessus.

Le procédé comprend les étapes suivantes :
- dans une première étape, on prépare le bloc polyamide PA₁ par polycondensation des monomères choisis : aminoacides, lactames ou diamines et diacides carboxyliques ; en présence d'un limiteur de chaîne approprié ;
- puis dans une seconde étape optionnelle, on fait réagir le bloc polyamide PA₁ obtenu avec tout ou une partie des blocs polyéther PE, en présence ou absence de catalyseur;
- dans une troisième étape, on prépare le bloc polyamide PA₂ par polycondensation des monomères choisis : aminoacides, lactames ou diamines et diacides carboxyliques ; en présence d'un limiteur de chaîne approprié ;
- dans une quatrième étape optionnelle, on fait réagir le bloc polyamide PA₂ obtenu avec tout ou partie des blocs polyéther PE, en présence ou absence d'un catalyseur,
- dans une cinquième étape, on fait réagir PA1 ou le milieu réactionnel issu de l'étape 2, avec PA2 ou le milieu réactionnel issu de l'étape 4, et avec PE ou le reliquat de PE non ajouté à l'étape 2 ou 4. La réaction peut se faire dans un premier temps sans catalyseur, puis ajout de catalyseur. L'ajout de catalyseur pourra se faire par exemple après ou lors de l'ajout du reliquat de PE si besoin.

Selon un premier mode de mise en oeuvre du procédé selon l'invention, celui-ci comporte les étapes suivantes :
- Préparation du polyamide PA1,
- Préparation du polyamide PA2,
- Mélange et mise en réaction des polyamides PA1 et PA2 en présence du polyéther PE.

Plus particulièrement, le procédé comprend les étapes suivantes :
- dans une première étape, on prépare le bloc polyamide PA₁ par polycondensation des monomères choisis : aminoacides, lactames ou diamines et diacides carboxyliques ; en présence d'un limiteur de chaîne approprié ;
- dans une seconde étape, on prépare le bloc polyamide PA₂ par polycondensation des monomères choisis : aminoacides, lactames ou diamines et diacides carboxyliques ; en présence d'un limiteur de chaîne approprié ;
- dans une troisième étape, on fait réagir le PA₁, PA₂ avec PE.

Selon un second mode de mise en oeuvre du procédé selon l'invention, celui-ci comprend les étapes successives suivantes :
- Préparation du polyamide PA1,
- Préparation du polyamide PA2,
- Mélange et mise en réaction du polyamide PA1 avec une partie du polyéther PE,
- Mélange et mise en réaction du polyamide PA2 avec une partie du polyéther PE,
- Mélange et mise en réaction des deux milieux réactionnels en présence de polyéther PE.

Plus particulièrement, le procédé comprend les étapes suivantes :
- dans une première étape, on prépare le bloc polyamide PA₁ par polycondensation des monomères choisis : aminoacides, lactames ou diamines et diacides carboxyliques ; en présence d'un limiteur de chaîne approprié ;
- puis dans une seconde étape, on fait réagir le bloc polyamide PA₁ obtenu avec tout ou une partie des blocs polyéther PE, en présence ou absence de catalyseur;
- dans une troisième étape, on prépare le bloc polyamide PA₂ par polycondensation des monomères choisis : aminoacides, lactames ou diamines et diacides carboxyliques ; en présence d'un limiteur de chaîne approprié ;
- dans une quatrième étape, on fait réagir le bloc polyamide PA₂ obtenu avec tout ou partie des blocs polyéther PE, en présence ou absence d'un catalyseur,
- dans une cinquième étape, on fait réagir le milieu réactionnel issu de l'étape 2, avec le milieu réactionnel issu de l'étape 4, avec le reliquat de PE non ajouté à l'étape 2 ou 4.

Selon un troisième mode de mise en oeuvre du procédé selon l'invention, celui-ci comprend les étapes suivantes :
- Préparation du polyamide PA1,
- Préparation du polyamide PA2,
- Mélange et mise en réaction d'un des deux polyamides avec une partie du polyéther PE,
- Mélange et mise en réaction du milieu réactionnel obtenu à l'étape précédente en présence du second polyamide (celui n'ayant pas encore été mis en contact avec le polyéther PE), et éventuellement avec le reliquat, si besoin, de polyéther PE.

Dans les procédés décrits ci-dessus, les réactions entre le ou les polyamides et le polyéther peuvent se faire avec ou sans catalyseur, celui-ci pouvant être introduit dans une ou plusieurs étapes. De préférence, la réaction se fait dans un premier temps sans catalyseur, puis ajout de catalyseur après l'ajout du reliquat de PE.

La méthode générale de préparation des polyamides et de la mise en réaction d'un polyamide et d'un polyéther est connue et est décrite, par exemple, dans le brevet français FR 2 846 332 et dans le brevet européen EP 1 482 011.

On pourra également ajouter pendant la synthèse, au moment jugé le plus opportun, une ou plusieurs molécules utilisées comme anti-oxydant, par exemple l'Irganox® 1010 ou l'Irganox® 245.

Avantageusement, on utilise, comme catalyseur, un dérivé d'un métal choisi dans le groupe formé par le titane, le zirconium et l'hafnium ou un acide fort tel que l'acide phosphorique, l'acide hypophosphoreux ou l'acide borique. On peut conduire la polycondensation à une température de 220 à 280°C, de préférence entre 230 et 250°C.

Le copolymère selon l'invention peut être utilisé dans des compositions qui peuvent, en outre, comprendre : des colorants, des agents de blanchiment des absorbeurs d'UV, des antioxydants, des stabilisants, des agents assouplissants, des plastifiants, des modifiants chocs, des agents renforçant, des agents nucléants et leurs mélanges.

### Utilisation

La présente invention porte aussi plus particulièrement sur l'utilisation d'un copolymère tel que défini ci-dessus.

Le copolymère selon l'invention peut être utilisé seul ou en tant qu'additif. Il peut servir à fabriquer, en tout ou partie, des articles façonnés, tel que des fibres, des tissus, des films, des feuilles, des joncs, des tubes, des pièces injectées.

### Article

L'invention porte aussi sur un article façonné comprenant le copolymère tel que défini ci-dessus ou préparé par un procédé tel que défini ci-dessus.

En d'autres termes, l'invention porte aussi sur une pièce formée en tout ou partie à partir du copolymère selon l'invention, ainsi que sur les utilisations d'une telle pièce.

Ainsi, l'article est avantageusement façonné pour des éléments de chaussure de sport, des ustensiles de sport tel que patins à glace, fixations de skis, raquettes, battes de sports, planches, fers à cheval, palmes, balles de golf, des articles de loisirs, de bricolage, des outils ou équipements de voirie soumis aux agressions climatiques et mécaniques, des articles de protection tel que visières de casques ou casquette, lunettes, branches de lunettes, des éléments de véhicules (en particulier de scooters, cyclomoteurs, motos, voitures, vélos) tels que protège-phares, rétroviseurs, petite pièce de voiture tout terrain, réservoirs, bande de courroie transporteuse. Un certain nombre de brevets ou demandes de brevets dont US 4,858,924 et US 4,919,434, dans le domaine des balles de golf, font état de matériaux polyamides élastomériques utilisés pour fabriquer les couches externes ou intermédiaires d'une balle de golf.

D'autres buts et avantages de la présente invention apparaîtront à la lecture des exemples suivants donnés à titre indicatif et nullement limitatif.

### Exemples

### Exemple 1 : Préparation d'un copolymère PEBA1 selon l'invention :

### Synthèse du bloc PA6

Dans un autoclave, on charge 1400g de lactame 6, 110,36g d'acide adipique et 98g d'eau. La température matière est de 280°C. On reste 3h sous pression de 22 bars, puis on détend environ 1h et on réalise 30 min de balayage sous azote.

### Synthèse du bloc PA12

Dans un autoclave, on charge 1400g de lactame 12, 110,36g d'acide adipique et 98g d'eau. La température matière est de 280°C. On reste 3h sous pression de 22 bars, puis on détend environ 1h et on réalise 30 min de balayage sous azote.

### Synthèse du PEBA1 : -[PA6-PTMG]-[PA12-PTMG]-

Dans un tube en verre, on fait réagir une heure, sous balayage d'azote, 8.15 g de PA6 avec 32.6 g de bloc PA12 et 19.25 g de PTMG. La température consignée est de 250°C et on agite le mélange 1h sous azote. On ajoute ensuite 0,3% de Zr(OBu)₄ et on se met sous vide réduit (<10 mbar). On suit l'évolution du couple pour arrêter l'essai, lorsqu'un couple suffisant est atteint.

Le PEBA1 obtenu est analysé par DSC et donne un point de fusion de 156°C.

### Exemple 2 : Préparation d'un copolymère PEBA2 selon l'invention :

### Synthèse du PEBA2 : -[PA6-PTMG]-[PA12-PTMG]-

Les polyamides PA6 et PA12 sont identiques à ceux décrits à l'exemple 1.

Dans un tube en verre muni d'une ancre, on introduit 8.15 g de PA6 avec 32.6 g de bloc PA12 et 19.25 g de PTMG. La température consignée est de 250°C. Sans étape intermédiaire sous azote, on ajoute 0.3% en poids de Zr(OBu)4 et on se met sous vide réduit (<10 mbar). On suit l'évolution du couple pour arrêter l'essai lorsqu'un couple suffisant est atteint.

Le PEBA2 obtenu est analysé par DSC et donne un point de fusion de 165°C.

### Exemple 3 : Préparation d'un copolymère PEBA3 comparatif :

### Synthèse du bloc PA6/12

Dans un autoclave, on charge 300g de Lactame 6 et 1200g de lactame 12, 118.25g d'acide adipique et 113.28g d'eau. La température matière est de 280°C. On reste 3h sous pression de 22 bars, puis on détend environ 1h et on réalise 30 min de balayage sous azote.

### Synthèse du PEBA3 : -[PA6/12-PTMG]-

Dans un tube en verre muni d'une ancre, on introduit 55g de bloc PA6/12 avec 17 g de PTMG. La température consigne est de 250°C. On ajoute ensuite 0.3% en poids de Zr(OBu)4 et on se met sous vide réduit (<10 mbar). On suit l'évolution du couple pour arrêter l'essai lorsqu'un couple suffisant est atteint.

Le PEBA3 obtenu est analysé par DSC et donne un point de fusion de 141°C.

On voit bien que PEBA1 et PEBA2 ont un point de fusion supérieur à celui de PEBA3.

### Exemple 4 : Préparation d'un copolymère PEBA4 selon l'invention :

On utilise le même bloc PA12 que pour l'exemple 1.

### Synthèse du bloc PAB.12

Dans un autoclave, on charge 2289g de BMACM, 2829g d'acide dodécanedioique et 100g d'eau. La température matière est de 250°C. On reste 3h sous pression de 25 bars, puis on détend environ 30min et on réalise 60 min de balayage sous azote.

### Synthèse du PEBA4 : -[PA12-PTMG]-[PAB.12-PTMG]-

Dans un tube en verre muni d'une ancre, on introduit 23.5 g de PA12 avec 25 g de bloc PAB.12 et 20.2 g de PTMG. La température consigne est de 250 °C. On ajoute ensuite 0.3% en poids de Zr(OBu)₄ et on se met sous vide réduit (<10 mbar). On suit l'évolution du couple pour arrêter l'essai lorsqu'un couple suffisant est atteint.

Le PEBA4 obtenu a une très bonne transparence et un module élevé à 23°C d'environ 490 MPa (mesure DMA).

### Exemple 5 : Préparation d'un mélange binaire comparatif :

Un PEBA de structure -[PAB.12(0.5)/B.14(0.5)-PTMG]- est préparé selon le mode opératoire suivant :
On a préparé des PEBA à partir de blocs PA à base de diamine cycloaliphatique selon le mode opératoire suivant : chargement de la diamine cycloaliphatique et des diacides dans un autoclave de 80 l. le réacteur purgé à l'azote et fermé, on chauffe à 260°C sous pression et sous agitation de 40 tr/mn Après un maintien d'une heure, on détend sous pression atmosphérique et on ajoute le polyéther et le catalyseur. Nous mettons le réacteur sous vide en 30 mn pour atteindre 50 mbars (20 mbars si nécessaire). La montée du couple dure environ deux heures. La viscosité atteinte, le réacteur est remis à pression atmosphérique et le produit est granulé et séché sous vide à 75°C.

Ce copolymère est ensuite mélangé à un PEBA semi-cristallin de structure -[PA12-PTMG]- en une teneur 50 :50.

La composition obtenue présente une très bonne transparence et un module élevé à 23°C d'environ 430 MPa (mesure DMA).

Les résultats figurent dans le tableau ci-dessous :

| | Ex 5 : -[PAB.12(0.5)/B.14(0.5) -PTMG]- + -[PA12-PTMG] | Ex 4 : PEBA4 : -[PA12-PTMG]-[PAB.12-PTMG]- |
|---|---|---|
| E' souplesse (MPa) | 430 | 490 |
| Transparence | Très satisfaisant | Très satisfaisant |

Ces résultats montrent que le copolymère selon l'invention conduit à un matériau plus souple et transparent. De plus, son procédé de synthèse est beaucoup plus économique et facile à mettre en oeuvre étant donné qu'il ne nécessite qu'une seule étape.

## Revendications

1. Copolymère comprenant au moins deux blocs polyamide de structure chimique différente, notés PA1 et PA2, et au moins un bloc polyéther.

2. Copolymère selon la revendication 1, **caractérisé en ce qu'**il comporte des liaisons ester entre chacun des blocs.

3. Copolymère selon la revendication 1 ou 2, **caractérisé en ce que** les blocs polyamides distincts sont obtenus par polymérisation d'un ou plusieurs motifs choisis parmi : 6, 11, 12, 4.6, 4.12, 4.14, 4.18, 6.6, 6.10, 6.12, 6.14, 6.18, Pip.10, 9.6, 9.12, 10.10, 10.12, 10.14, 10.18, 10.36, 10.T, 6.T, 9.T, MXD.6, MXD.10, B.10, B.12, B.14, B.18, B.36, P.10, P.12, P.14, P.18, P.36,et leurs mélanges.

4. Copolymère selon la revendication 3, **caractérisé en ce que** le premier bloc polyamide noté PA1 présente un nombre d'atomes de carbone par atome d'azote supérieur ou égal à 8.

5. Copolymère selon la revendication 4, **caractérisé en ce que** le bloc PA2 présente un nombre d'atomes de carbone par atome d'azote inférieur à 8.

6. Copolymère selon l'une quelconque des revendications 1 à 4, **caractérisé en ce que** le bloc PA2 minoritaire est choisi de telle façon que son point de fusion ou sa température de transition vitreuse soit supérieur à celui du bloc PA1.

7. Copolymère selon l'une quelconque des revendications précédentes, **caractérisé en ce que** le pourcentage en poids de blocs PA1 sur le poids total de polyamide présent dans le copolymère est compris dans la gamme de 50 à 99%, de préférence 60 à 95%, de préférence encore de 65 à 90%.

8. Copolymère selon l'une quelconque des revendications précédentes, **caractérisé en ce que** le bloc PE est choisi parmi le polyéthylène éther glycol (PEG), le polypropylène éther glycol (PPG), le polytétraméthylène éther glycol (PTMG), le polyhexaméthylène éther glycol, le polytriméthylèneéther glycol (PO3G), le poly(3-alkyl tétrahydrofuranne) en particulier le poly(3-méthyltétrahydrofuranne (poly(3MeTHF)) et leurs copolymères à blocs ou statistiques.

9. Copolymère selon l'une quelconque des revendications précédentes, **caractérisé en ce que** le pourcentage en poids des blocs polyéther dans le copolymère est compris dans la gamme de 1 à 80%, de préférence 4 à 50%, de préférence encore entre 4 et 35%.

10. Copolymère selon l'une quelconque des revendications précédentes, **caractérisé en ce qu'**il comporte plusieurs blocs polyéther distincts.

11. Procédé de préparation d'un copolymère tel que défini à l'une des revendications précédentes, comprenant les étapes suivantes :
- dans une première étape, on prépare le bloc polyamide PA₁ par polycondensation des monomères choisis : aminoacides, lactames ou diamines et diacides carboxyliques ; en présence d'un limiteur de chaîne approprié ;
- puis dans une seconde étape optionnelle, on fait réagir le bloc polyamide PA₁ obtenu avec tout ou une partie des blocs polyéther PE, en présence ou absence de catalyseur;
- dans une troisième étape, on prépare le bloc polyamide PA₂ par polycondensation des monomères choisis : aminoacides, lactames ou diamines et diacides carboxyliques ; en présence d'un limiteur de chaîne approprié ;
- dans une quatrième étape optionnelle, on fait réagir le bloc polyamide PA₂ obtenu avec tout ou partie des blocs polyéther PE, en présence ou absence d'un catalyseur,
- dans une cinquième étape, on fait réagir PA1 ou le milieu réactionnel issu de l'étape 2, avec PA2 ou le milieu réactionnel issu de l'étape 4, et avec PE ou le reliquat de PE non ajouté à l'étape 2 ou 4.

12. Procédé de préparation d'un copolymère tel que défini à l'une des revendications 1 à 10, comprenant les étapes suivantes :
- Préparation du polyamide PA1,
- Préparation du polyamide PA2,
- Mélange et mise en réaction des polyamides PA1 et PA2 en présence du polyéther PE.

13. Procédé de préparation d'un copolymère tel que défini à l'une des revendications 1 à 10, comprenant les étapes suivantes :
- Préparation du polyamide PA1,
- Préparation du polyamide PA2,
- Mélange et mise en réaction du polyamide PA1 avec une partie du polyéther PE,
- Mélange et mise en réaction du polyamide PA2 avec une partie du polyéther PE,
- Mélange et mise en réaction des deux milieux réactionnels en présence de polyéther PE.

14. Procédé de préparation d'un copolymère tel que défini à l'une des revendications 1 à 10, comprenant les étapes suivantes :
- Préparation du polyamide PA1,
- Préparation du polyamide PA2,
- Mélange et mise en réaction d'un des deux polyamides avec une partie du polyéther PE,
- Mélange et mise en réaction du milieu réactionnel obtenu à l'étape précédente en présence du second polyamide, et éventuellement avec le reliquat de polyéther PE.

15. Utilisation du copolymère tel que défini à l'une des revendications 1 à 10 pour fabriquer en tout ou partie, des articles façonnés choisis parmi des fibres, des tissus, des films, des feuilles, des joncs, des tubes, des pièces injectées.

16. Article façonné comprenant le copolymère tel que défini à l'une des revendications 1 à 10 ou préparé par un procédé tel que défini à l'une quelconque des a revendications 11 à 14.

17. Article façonné selon la revendication 16, **caractérisé par le fait qu'**il consiste en un article ou élément d'article de sport choisi parmi un élément de chaussure de sport, un ustensile de sport tel que patin à glace, fixation de skis, raquette, batte de sport, planche de sport de glisse, fer à cheval, palme, balle de golf, un article de loisirs, de bricolage, un outil ou équipement de voirie soumis aux agressions climatiques et mécaniques, un article de protection tel que visière de casque ou casquette, lunettes, branche de lunettes, un élément de véhicule, en particulier de scooter, cyclomoteur, moto, voiture, vélo, tel que protège-phare, rétroviseur, petite pièce de voitures tout terrain, réservoir, bande de courroie transporteuse.

## Patentansprüche

1. Copolymer mit mindestens zwei Polyamidblöcken mit unterschiedlicher chemischer Struktur, die als PA1 und PA2 bezeichnet werden, und mindestens einem Polyetherblock.

2. Copolymer nach Anspruch 1, **dadurch gekennzeichnet, dass** es zwischen jedem der Blöcke Esterbindungen umfasst.

3. Copolymer nach Anspruch 1 oder 2, **dadurch gekennzeichnet, dass** die verschiedenen Polyamidblöcke durch Polymerisation einer oder mehrerer Einheiten, die aus 6, 11, 12, 4.6, 4.12, 4.14, 4.18, 6.6, 6.10, 6.12, 6.14, 6.18, Pip.10, 9.6, 9.12, 10.10, 10.12, 10.14, 10.18, 10.36, 10.T, 6.T, 9.T, MXD.6, MXD.10, B.10, B.12, B.14, B.18, B.36, P.10, P.12, P.14, P.18, P.36 und Mischungen davon ausgewählt sind, erhalten werden.

4. Copolymer nach Anspruch 3, **dadurch gekennzeichnet, dass** der erste Polyamidblock mit der Bezeichnung PA1 eine Zahl von Kohlenstoffatomen pro Stickstoffatom größer oder gleich 8 aufweist.

5. Copolymer nach Anspruch 4, **dadurch gekennzeichnet, dass** der PA2-Block eine Zahl von Kohlenstoffatomen pro Stickstoffatom kleiner als 8 aufweist.

6. Copolymer nach einem der Ansprüche 1 bis 4, **dadurch gekennzeichnet, dass** der untergeordnete PA2-Block so gewählt ist, dass sein Schmelzpunkt bzw. seine Glasübergangstemperatur größer ist als der- bzw. diejenige des PA1-Blocks.

7. Copolymer nach einem der vorhergehenden Ansprüche, **dadurch gekennzeichnet, dass** der Gewichtsprozentanteil von PA1-Blöcken, bezogen auf das Gesamtgewicht des in dem Copolymer vorliegenden Polyamids, im Bereich von 50 bis 99 %, vorzugsweise 60 bis 95 %, weiter bevorzugt 65 bis 90 %, liegt.

8. Copolymer nach einem der vorhergehenden Ansprüche, **dadurch gekennzeichnet, dass** der PE-Block aus Polyethylenetherglykol (PEG), Polypropylenetherglykol (PPG), Polytetramethylenetherglykol (PTMG), Polyhexamethylenetherglykol, Polytrimethylenetherglykol (PO3G), Poly(3-alkyltetrahydrofuran), insbesondere Poly(3-methyltetrahydrofuran) (Poly-(3MeTHF)), und blockartig oder statistisch aufgebauten Copolymeren davon ausgewählt ist.

9. Copolymer nach einem der vorhergehenden Ansprüche, **dadurch gekennzeichnet, dass** der Gewichtsanteil von Polyetherblöcken in dem Copolymer im Bereich von 1 bis 80 %, vorzugsweise 4 bis 50 %, weiter bevorzugt zwischen 4 und 35 %, liegt.

10. Copolymer nach einem der vorhergehenden Ansprüche, **dadurch gekennzeichnet, dass** es mehrere verschiedene Polyetherblöcke umfasst.

11. Verfahren zur Herstellung eines Copolymers gemäß einem der vorhergehenden Ansprüche, das folgende Schritte umfasst:
- in einem ersten Schritt wird der Polyamidblock PA₁ durch Polykondensation von Monomeren, die aus Aminosäuren, Lactamen oder Diaminen und Dicarbonsäuren ausgewählt werden, in Gegenwart eines geeigneten Kettenabbruchmittels hergestellt;
- dann wird in einem fakultativen zweiten Schritt der erhaltene Polyamidblock PA₁ mit allen Polyetherblöcken PE oder einem Teil davon in Gegenwart oder Abwesenheit von Katalysator umgesetzt;
- in einem dritten Schritt wird der Polyamidblock PA₂ durch Polykondensation von Monomeren, die aus Aminosäuren, Lactamen oder Diaminen und Dicarbonsäuren ausgewählt werden, in Gegenwart eines geeigneten Kettenabbruchmittels hergestellt;
- in einem fakultativen vierten Schritt wird der erhaltene Polyamidblock PA₂ mit allen Polyetherblöcken PE oder einem Teil davon in Gegenwart oder Abwesenheit eines Katalysators umgesetzt;
- in einem fünften Schritt wird PA1 oder das Reaktionsmedium aus Schritt 2 mit PA2 oder dem Reaktionsmedium aus Schritt 4 und mit PE oder dem nicht in Schritt 2 oder 4 zugegebenen Rest von PE umgesetzt.

12. Verfahren zur Herstellung eines Copolymers gemäß einem der Ansprüche 1 bis 10, das folgende Schritte umfasst:
- Herstellung des Polyamids PA1,
- Herstellung des Polyamids PA2,
- Mischen und Umsetzen der Polyamide PA1 und PA2 in Gegenwart des Polyethers PE.

13. Verfahren zur Herstellung eines Copolymers gemäß einem der Ansprüche 1 bis 10, das folgende Schritte umfasst:
- Herstellung des Polyamids PA1,
- Herstellung des Polyamids PA2,
- Mischen und Umsetzen des Polyamids PA1 mit einem Teil des Polyethers PE,
- Mischen und Umsetzen des Polyamids PA2 mit einem Teil des Polyethers PE,
- Mischen und Umsetzen der beiden Reaktionsmedien in Gegenwart des Polyethers PE.

14. Verfahren zur Herstellung eines Copolymers gemäß einem der Ansprüche 1 bis 10, das folgende Schritte umfasst:
- Herstellung des Polyamids PA1,
- Herstellung des Polyamids PA2,
- Mischen und Umsetzen eines der beiden Polyamide mit einem Teil des Polyethers PE,
- Mischen und Umsetzen des im vorhergehenden Schritt erhaltenen Reaktionsmediums in Gegenwart des zweiten Polyamids und gegebenenfalls mit dem Rest des Polyethers PE.

15. Verwendung des Copolymers gemäß einem der Ansprüche 1 bis 10 zur vollständigen oder teilweisen Herstellung von Formkörpern, die aus Fasern, Geweben, Filmen, Folien, Streben, Rohren oder Spritzgussteilen ausgewählt sind.

16. Formkörper, umfassend das Copolymer gemäß einem der Ansprüche 1 bis 10 oder hergestellt durch ein Verfahren gemäß einem der Ansprüche 11 bis 14.

17. Formkörper nach Anspruch 16, **dadurch gekennzeichnet, dass** er aus einem Sportartikel oder Element eines Sportartikels, ausgewählt aus einem Sportschuhelement, einem Sportgerät wie einem Schlittschuh, einer Skibindung, einem Schläger, einem Gleitsportbrett, einem Hufeisen, einer Schwimmflosse, einem Golfball, einem Freizeitartikel oder einem Bastelartikel, einem Werkzeug oder einer Einrichtung für Verkehrswege, das bzw. die klimatischen oder mechanischen Belastungen ausgesetzt sind, einem Schutzartikel wie einem Helm- oder Kappenvisier, einer Brille, einem Brillenbügel, einem Element eines Fahrzeugs, insbesondere eines Motorrollers, eines Mofas, eines Motorrads, eines Autos oder eines Fahrrads, wie einem Scheinwerferschutz, einem Rückspiegel, einem kleinen Teil für Geländefahrzeuge, einem Tank oder einem Förderband besteht.

## Claims

1. A copolymer comprising at least two polyamide blocks of different chemical structure, noted PA1 and PA2, and at least one polyether block.

2. The copolymer as claimed in claim 1, **characterized in that** it comprises ester bonds between each of the blocks.

3. The copolymer as claimed in claim 1 or 2, **characterized in that** the different polyamide blocks are obtained by polymerization of one or more units chosen from: 6, 11, 12, 4.6, 4.12, 4.14, 4.18, 6.6, 6.10, 6.12, 6.14, 6.18, Pip.10, 9.6, 9.12, 10.10, 10.12, 10.14, 10.18, 10.36, 10.T, 6.T, 9.T, MXD.6, MXD.10, B.10, B.12, B.14, B.18, B.36, P.10, P.12, P.14, P.18, P.36, and mixtures thereof.

4. The copolymer as claimed in claim 3, **characterized in that** the first polyamide block noted PA1 has a number of carbon atoms per nitrogen atom of greater than or equal to 8.

5. The copolymer as claimed in claim 4, **characterized in that** the PA2 block has a number of carbon atoms per nitrogen atom of less than 8.

6. The copolymer as claimed in any one of claims 1 to 4, **characterized in that** the minor PA2 block is chosen such that its melting point or its glass transition temperature is greater than that of the PA1 block.

7. The copolymer as claimed in any one of the preceding claims, **characterized in that** the weight percentage of PA1 blocks relative to the total weight of polyamide present in the copolymer is within the range from 50% to 99%, preferably 60% to 95%, more preferably from 65% to 90%.

8. The copolymer as claimed in any one of the preceding claims, **characterized in that** the PE block is chosen from polyethylene ether glycol (PEG), polypropylene ether glycol (PPG), polytetramethylene ether glycol (PTMG), polyhexamethylene ether glycol, polytrimethylene ether glycol (PO3G), poly(3-alkyl tetrahydrofuran) in particular poly(3-methyltetrahydrofuran (poly(3MeTHF)) and block or random copolymers thereof.

9. The copolymer as claimed in any one of the preceding claims, **characterized in that** the weight percentage of polyether blocks in the copolymer is within the range of 1% to 80%, preferably 4% to 50%, more preferably between 4% and 35%.

10. The copolymer as claimed in any one of the preceding claims, **characterized in that** it comprises several different polyether blocks.

11. A process for preparing a copolymer as defined in one of the preceding claims, comprising the following steps:
- in a first step, the polyamide block PA1 is prepared by polycondensation of monomers chosen from: amino acids, lactams or diamines and dicarboxylic acids; in the presence of a suitable chain limiter;
- next, in an optional second step, the polyamide block PA1 obtained is reacted with all or some of the polyether blocks PE, in the presence or absence of catalyst;
- in a third step, the polyamide block PA2 is prepared by polycondensation of monomers chosen from: amino acids, lactams or diamines and dicarboxylic acids; in the presence of a suitable chain limiter;
- in an optional fourth step, the polyamide block PA2 obtained is reacted with all or some of the polyether blocks PE, in the presence or absence of a catalyst,
- in a fifth step, PA1 or the reaction medium derived from step 2 is reacted with PA2 or the reaction medium derived from step 4, and with PE or the residual PE not added in step 2 or 4.

12. A process for preparing a copolymer as defined in one of claims 1 to 10, comprising the following steps:
- Preparation of the polyamide PA1,
- Preparation of the polyamide PA2,
- Mixing and reacting of the polyamides PA1 and PA2 in the presence of the polyether PE.

13. A process for preparing a copolymer as defined in one of claims 1 to 10, comprising the following steps:
- Preparation of the polyamide PA1,
- Preparation of the polyamide PA2,
- Mixing and reacting of the polyamide PA1 with part of the polyether PE,
- Mixing and reacting of the polyamide PA2 with part of the polyether PE,
- Mixing and reacting of the two reaction media in the presence of polyether PE.

14. A process for preparing a copolymer as defined in one of claims 1 to 10, comprising the following steps:
- Preparation of the polyamide PA1,
- Preparation of the polyamide PA2,
- Mixing and reacting of one of the two polyamides with part of the polyether PE,
- Mixing and reacting of the reaction medium obtained from the preceding step in the presence of the second polyamide, and optionally with the residual polyether PE.

15. The use of the copolymer as defined in one of claims 1 to 10 for manufacturing, totally or partially, fashioned articles chosen from fibers, fabrics, films, sheets, rods, tubes and injection-molded components.

16. A fashioned article comprising the copolymer as defined in one of claims 1 to 10 or prepared via a process as defined in any one of claims 11 to 14.

17. The fashioned article as claimed in claim 16, **characterized in that** it consists of a sports article or component of a sports article chosen from a sports shoe element, a sports tool such as an ice skate, ski attachments, rackets, sports bats, sliding sport boards, horseshoes, flippers, golf balls, a leisure or handicraft article, a road maintenance tool or equipment that is subject to climatic and mechanical attack, a protective article such as a helmet or hat visor, spectacles, spectacle arms, a vehicle component, in particular for a scooter, moped, motorbike, car or bicycle, such as a headlamp protector, a rear-view mirror, small parts for all-road vehicles, a tank or a conveyor belt.
